# EUROPEAN PATENT APPLICATION

(11) **EP 4 588 956 A1**
(43) Date of publication of application: **23.07.2025**
(21) Application number: 24152957.7
(22) Date of filing: 19.01.2024
(51) Int. Cl.: C08G 77/26, C08G 77/54, C09D 183/08, C09D 183/14

(54) **NEW SILANE MONOMERS FOR ORGANOSILOXANE POLYMERS**

(71) Applicant: Optitune Oy, 90590 Oulu (FI)
(72) Inventor: LEGRAND, Sacha, 90590 Oulu (FI); MALO, Kaisa, 90590 Oulu (FI); RAJANIEMI, Sari, 90590 Oulu (FI); KÄRKKÄINEN, Ari, 90590 Oulu (FI)
(74) Representative: Maiwald GmbH

(57) **Abstract**

The present invention relates to an organosiloxane polymer comprising at least one silane monomer comprising a triazole moiety, a process for producing said olrganosiloxane polymer, in which the at silane monomer comprising a triazole moiety is prepared by click-cycloaddition reaction, a layered structure comprising a coating layer, which comprises said organosiloxane polymer, a process for producing said layered structure and the use of said organosiloxe polymer as fluorine free coating.

## Description

The present invention relates to an organosiloxane polymer comprising at least one silane monomer comprising a triazole moiety, a process for producing said organosiloxane polymer, in which the silane monomer comprising a triazole moiety is prepared by click-cycloaddition reaction, a layered structure comprising a coating layer, which comprises said organosiloxane polymer, a process for producing said layered structure and the use of said organosiloxe polymer as fluorine free coating.

### Technical background

Organosiloxane polymers are generally known to be used for transparent and abrasion resistant coatings in optical and transparent display industries as well as electronic, semiconducting and photovoltaic industry, amongst others.

For obtaining the requested properties for coatings like mechanical properties, abrasion resistance, hydrophobicity and optical properties, per-and polyfluorinated silane monomers are introduced into the organosiloxane polymers or per-and polyfluorinated compounds are added to the coating compositions when used for coating compositions. WO 2023/198747 A1 discloses a flexible monolayered polysiloxane hardcoating, in which the organosiloxane comprises per-and polyfluorinated silane monomers.

WO 2023/198743 and WO 2023/198746 disclose a flexible multilayered polysiloxane hardcoating, in which at least one layer comprises fluorinated components.

Per- and polyfluoroalkyl substances (PFAS) are a class of chemicals used in numerous industrial sectors with many daily consumer applications. They have been detected all over the globe, including at remote locations distant from their original production site, due to their sorption to aerosol particles found in the atmosphere. There are very harmful for humans and nature, including marine environments. They are linked to cardiovascular diseases, damaged the unborn child, responsible for inflammation and immunosuppression, suspected to damage fertility, breast milk, diabetes.

Strong resistance to degradation and they are known as forever chemicals. For example, there are found in drinking water at very high levels. Due to national and international regulations, where the production and uses of PFAS is going to be severely controlled and banned, this is an urgent need to shift from the fluorine-based chemicals to safer and greener alternatives.

Thus, there is a need in the art for transparent and abrasion resistant coatings in optical and transparent display industries as well as electronic, semiconducting and photovoltaic industry, amongst others, which show a good balance of properties in regard of mechanical properties, such as high scratch resistance and hardness and low abrasion, and optical properties, such as a low haze and high light transmittance, and are free of per- and polyfluoroalkyl substances (PFAS).

Click chemistry (Nobel prize in chemisty in 2022) has been used for producing hydrocarbyl-trialkoxy-silyl-triazoles. Thereby, click-cycloaddition reaction of the accordant azidoalkyltrialkoxysilane and the accordant alkyne derivative in the presence of a copper-based catalyst and sodium ascorbate catalyst (see e.g. R. Winkler, S. Pellet-Rostaing, G. Arrachart, Efficient and multi-function compatible click-reaction of organosilanes, Tetrahedron Lett. 61 (30) (2020), 152145, N. Moitra, J.J.E. Moreau, X. Cattoen, M.W.C. Man, Convenient route to water-sensitive sol-gel precursors using click chemistry, Chem. Commun. (Cambridge, U. K.) 46 (44) (2010), 8416-8418 and G. Singh, Gurjaspreet; S. S. Satinderpal, J. Singh, A. Arora, R. K. Sharma, Synthesis of polyfunctional triethoxysilanes by 'click silylation, Tetrahedron Lett. 55 (4) (2014), 903-909).

In the present invention new organosiloxane polymers are introduced, which comprise at least one silane monomer comprising a triazole moiety. These new organosiloxane polymers have been found to be suitable for coating applications, which show a good balance of properties in regard of mechanical properties, such as high scratch resistance and hardness and low abrasion, and optical properties, such as a low haze and high light transmittance, without need for the presence of per- and polyfluoroalkyl substances (PFAS).

### Summary of the invention

The present invention relates to an organosiloxane polymer comprising
(A) one or more, preferably one to five, more preferably one to four, most preferably one or two silane monomers, which independently are selected from molecules of formula (I)

   R³ₐSiY₄₋ₐ (I)

   wherein
   R³ is independently selected from hydrogen and a group comprising linear and branched alkyl, cycloalkyl, alkenyl, alkynyl, (alk)acrylate, epoxy, allyl, vinyl and alkoxy and aryl having 1 to 6 rings, and wherein the group is substituted with heteroatoms selected from Si, O and/or N or unsubstituted;
   Y is a hydrolysable group or a hydrocarbon residue; and
   a is independently an integer 1 to 3; and
(B) one or more, preferably one to five, more preferably one to four, most preferably one or two silane monomers, which independently are selected from molecules of formula (II) 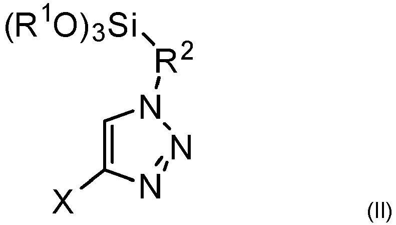 wherein
   R¹ is independently selected from a C₁ to C₁₀ linear or branched alkyl group, preferably a C₁ to C₆ linear or branched alkyl group, more preferably a C₁ to C₃ linear or branched alkyl group, most preferably a methyl or ethyl group;
   R² is independently selected from a C₁ to C₂₀ linear or branched alkyl group, preferably a C₂ to C₁₆ linear or branched alkyl group, more preferably a C₃ to C₁₂ linear or branched alkyl group, most preferably a linear propyl or undecyl alkyl group; and
   X is independently selected from a group comprising linear and branched alkyl, cycloalkyl, alkenyl, alkynyl, (alk)acrylate, epoxy, allyl, vinyl and alkoxy and aryl having 1 to 6 rings, and wherein the group is substituted with heteroatoms selected from Si, O and/or N or unsubstituted, preferably a group comprising linear and branched alkyl, cycloalkyl, and aryl having 1 to 6 rings, and wherein the group is substituted with heteroatoms selected from Si, O and/or N or unsubstituted, more preferably a group comprising aryl having 1 to 6 rings, and wherein the group is substituted with heteroatoms selected from Si, O and/or N or unsubstituted.

Further, the present invention relates to a process for producing the organosiloxane polymer as described above or below comprising the steps of:
a) Preparing the one or more silane monomers (B) by click-cycloaddition reaction of the accordant azidoalkyltrialkoxysilane and the accordant alkyne derivative in the presence of a copper-based catalyst and sodium ascorbate catalyst;
b) Providing the one or more silane monomers (A);
c) Admixing the one or more silane monomers (A) and the one or more silane monomers (B) in a first solvent to obtain a mixture;
d) Subjecting the mixture to an at least partial hydrolysis of the monomers in the presence of a catalyst, whereby the hydrolysed monomers are at least partially polymerized and cross-linked;
e) Optionally changing the first solvent to a second solvent;
f) Optionally subjecting the mixture after step d) or e), if present, to further crosslinking by thermal, radiation or photo initiation or radical polymerization.

Still further, the present invention relates to a layered structure comprising
(X) a substrate layer; and
(Y) a coating layer coated on at least one surface of the substrate layer (X),
wherein the coating (Y) comprises the organosiloxane polymer as described above or below.

Additionally, the present invention relates to a process for producing the layered structure as described above or below comprising the following steps:
- Providing a substrate (X);
- Providing a composition comprising the organosiloxane polymer as described above or below;
- Depositing the composition onto at least one surface of the substrate (X) to form a coating layer (Y);
- Cross-linking the siloxane polymer chains organosiloxane polymer of the coating layer (Y) as to obtain a coating layer (Y) comprising a cross-linked organosiloxane polymer on at least one surface of the substrate (X).

Furthermore, the present invention relates to a silane monomer selected from the group consisting of 1-(Phenylpropyl)-4-[3-(triethoxysilyl)propyl]-1*H*-1,2,3-triazole, 1-(Phenylpropyl)-4-[3-(trimethoxysilyl)undecyl]-1*H*-1,2,3-triazole, 1-(Napththyl)-[3-(triethoxysilyl)propyl]-1*H*-1,2,3-triazole and 4-(1,1'-biphenyl)-[3-(triethoxysilyl)propyl]-1*H-*1,2,3-triazole.

Finally, the present invention relates to the use of the organosiloxane polymer as described above or below as fluorine-free hard coating.

Various exemplifying and non-limiting embodiments of the invention both as to constructions and to methods of operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of also un-recited features. The features recited in depending claims are mutually free combinable unless otherwise explicitly stated.

### Description of the invention

### Organosiloxane polymer

The new organosiloxane polymer is characterized in comprising one or more, preferably one to five, more preferably one to four, most preferably one or two silane monomers, which independently are selected from molecules of formula (II) 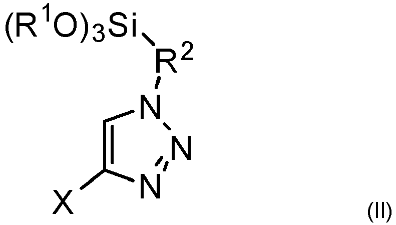 wherein
R¹ is independently selected from a C₁ to C₁₀ linear or branched alkyl group, preferably a C₁ to C₆ linear or branched alkyl group, more preferably a C₁ to C₃ linear or branched alkyl group, most preferably a methyl or ethyl group;
R² is independently selected from a C₁ to C₂₀ linear or branched alkyl group, preferably a C₂ to C₁₆ linear or branched alkyl group, more preferably a C₃ to C₁₂ linear or branched alkyl group, most preferably a linear propyl or undecyl alkyl group; and
X is independently selected from a group comprising linear and branched alkyl, cycloalkyl, alkenyl, alkynyl, (alk)acrylate, epoxy, allyl, vinyl and alkoxy and aryl having 1 to 6 rings, and wherein the group is substituted with heteroatoms selected from Si, O and/or N or unsubstituted, preferably a group comprising linear and branched alkyl, cycloalkyl, and aryl having 1 to 6 rings, and wherein the group is substituted with heteroatoms selected from Si, O and/or N or unsubstituted, more preferably a group comprising aryl having 1 to 6 rings, and wherein the group is substituted with heteroatoms selected from Si, O and/or N or unsubstituted.

X is generally not particularly limited.

X can be any substituent of an alkyne derivative that can be added to the accordant azidoalkyltrialkoxysilane to produce a silane monomer according to formula (II) by means of cycloaddition reaction.

X can be a group comprising or consisting a linear or branched alkyl or cycloalkyl residue, which is substituted with one or more, such as 1 to 10, preferably 1 to 6, more preferably 1 to 3 heteroatoms selected from Si, O and/or N or is unsubstituted. The linear or branched alkyl or cycloalkyl residue preferably comprises 1 to 30 carbon atoms, more preferably 2 to 24 carbon atoms, still more preferably 2 to 20 carbon atoms.

X can be a group comprising an unsaturated linear or branched alkyl or cycloalkyl residue, which is substituted with one or more, such as 1 to 10, preferably 1 to 6, more preferably 1 to 3 heteroatoms selected from Si, O and/or N or is unsubstituted, i.e. comprising a linear or branched alkenyl and/or alkynyl group with one or more, such as 1 to 10, preferably 1 to 6, more preferably 1 to 3 unsaturations, which is substituted with one or more, such as 1 to 10, preferably 1 to 6, more preferably 1 to 3 heteroatoms selected from Si, O and/or N or is unsubstituted. The linear or branched alkyl or cycloalkyl residue preferably comprises 1 to 30 carbon atoms, more preferably 2 to 24 carbon atoms, still more preferably 2 to 20 carbon atoms.

X can be a group comprising a linear, branched or cyclic hydrocarbyl group with one or more, such as 1 to 10, preferably 1 to 6, more preferably 1 to 3 functional groups selected from (alk)acrylate, epoxy, allyl, vinyl and alkoxy, which apart from said functional groups is substituted with one or more, such as 1 to 10, preferably 1 to 6, more preferably 1 to 3 heteroatoms selected from Si, O and/or N or is unsubstituted. The linear, branched or cyclic hydrocarbyl residue with one or more functional groups preferably comprises 1 to 30 carbon atoms, more preferably 2 to 24 carbon atoms, still more preferably 2 to 20 carbon atoms.

X can be a group comprising an aryl group having 1 to 6 rings, which is substituted with heteroatoms selected from Si, O and/or N or is unsubstituted. The aryl group can have 1 to 6, preferably 1 to 4 aryl rings. The aryl rings can be at least party or fully condensed, such as condensed rings of naphtyl structure, anthracene structure, phenanthracene structure, fluorene structure, phenalene structure, pyrene structure, tetracene structure or chrysene structure or condensed rings with 5 or 6 aryl rings. The condensed rings can be heteroaromatic rings comprising one or more, such as 1 to 6 heteroatoms, selected from O and/or N. The condensed rings can be hydrocarbon aromatic rings. The group comprising an aryl group having 1 to 6 rings can further comprise functional groups such as hydroxyl, carboxy, ketone, alkoxy, aldehyde, epoxy, allyl, vinyl, amine or aminoacid groups.

The group comprising an aryl group having 1 to 6 rings preferably comprises 6 to 50 carbon atoms, more preferably 6 to 40 carbon atoms, still more preferably 6 to 30 carbon atoms.

It is preferred that none of R¹, R² orX in formula (II) comprises fluorine atoms.

In one preferred embodiment the one or more silane monomers (B) are selected from the group consisting of 1-(Phenylpropyl)-4-[3-(triethoxysilyl)propyl]-1*H*-1,2,3-triazole, 1-(Phenylpropyl)-4-[3-(trimethoxysilyl)undecyl]-1*H*-1,2,3-triazole, 1-(Napththyl)-[3-(triethoxysilyl)propyl]-1*H*-1,2,3-triazole and 4-(1,1'-biphenyl)-[3-(triethoxysilyl)propyl]-1H-1,2,3-triazole.

The one or more silane monomers (B) are obtainable by click-cycloaddition reaction of the accordant azidoalkyltrialkoxysilane and the accordant alkyne derivative in the presence of a copper-based catalyst and sodium ascorbate catalyst.

Click-cycloaddition reaction generally follows the following reaction scheme as disclosed as Scheme 1 in G. Singh, Gurjaspreet; S. S. Satinderpal, J. Singh, A. Arora, R. K. Sharma, Synthesis of polyfunctional triethoxysilanes by 'click silylation, Tetrahedron Lett. 55 (4) (2014), 903-909.

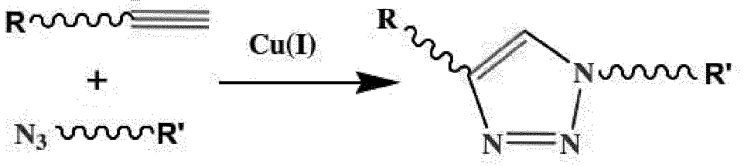

In said scientific article also the general reaction mechanism for click silylation based on 3-azidopropylriethoxysilane is shown in scheme 3

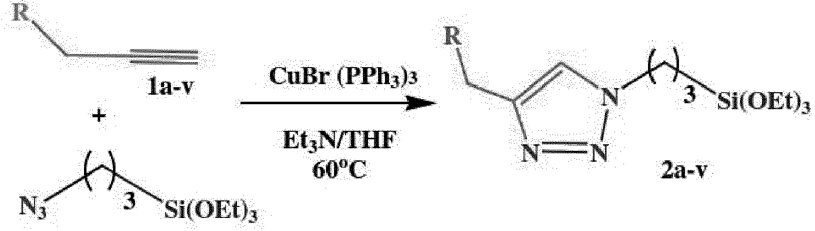

The azidoalkyltrialkoxysilane is preferably solved in a solvent, such as e.g. dimethylformamid (DMF) or dimethylsulfoxide (DMSO). Then the accordant alkyne derivative is added to the solution preferably in molar equivalence to the azidoalkyltrialkoxysilane. After that the catalyst is added.

Suitable catalysts can be Cu(I)-based catalysts or Cu(II) based catalysts in combination with a reductant, like an ascorbate salt. A suitable catalyst is e.g. Cu(II)SO₄·5H₂O and sodium ascorbate. The chemical reaction to form the silane monomer (B) according to formula (II) usually takes place at room temperature under stirring. The aqueous phase is preferably extracted, and the resulting organic phase is purified.

For the present invention four new silane monomers according to formula (II) have been prepared according to the following reaction schemes:

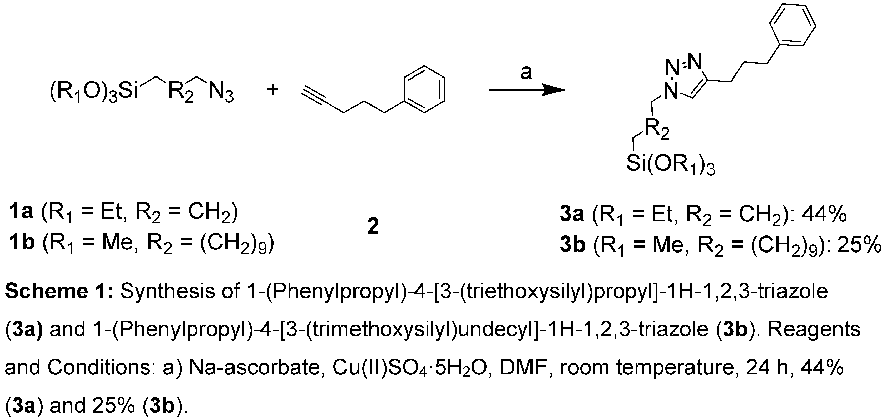

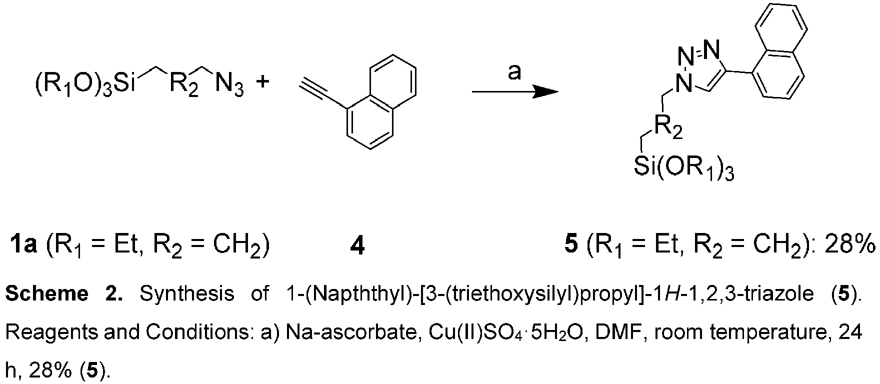

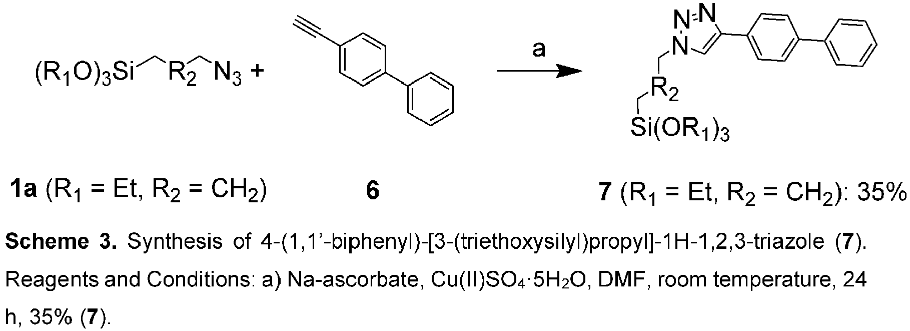

The aromatic proton and carbon atoms present in monomers **5** and **7** are numbered as follows:.

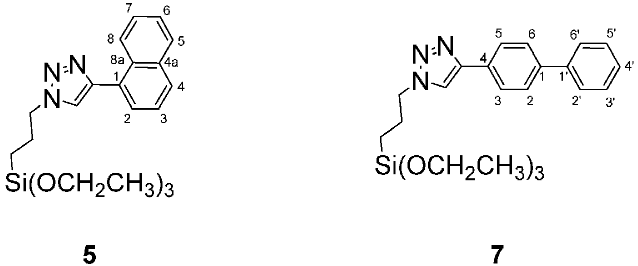

The reaction conditions and the NMR data of the accordant silanes are described below in the example section.

In one aspect the present invention is directed to a silane monomer selected from the group consisting of 1-(Phenylpropyl)-4-[3-(triethoxysilyl)propyl]-1*H*-1,2,3-triazole, 1-(Phenylpropyl)-4-[3-(trimethoxysilyl)undecyl]-1*H*-1,2,3-triazole, 1-(Napththyl)-[3-(triethoxysilyl)propyl]-1*H*-1,2,3-triazole and 4-(1,1'-biphenyl)-[3-(triethoxysilyl)propyl]-1*H-*1,2,3-triazole.

The silane monomer is preferably prepared according to the accordant scheme 1-3 as described above or below, especially exemplified in the example section.

It is preferred that the silane monomer selected from the group consisting of 1-(Phenylpropyl)-4-[3-(triethoxysilyl)propyl]-1*H*-1,2,3-triazole, 1-(Phenylpropyl)-4-[3-(trimethoxysilyl)undecyl]-1*H*-1,2,3-triazole, 1-(Napththyl)-[3-(triethoxysilyl)propyl]-1*H-*1,2,3-triazole and 4-(1,1'-biphenyl)-[3-(triethoxysilyl)propyl]-1*H*-1,2,3-triazole is used as silane monomer for the production of an organosiloxane, preferably the organosiloxane according to all aspects of the present invention as described above or below.

The organosiloxane polymer in addition to the one or more silane monomers (B) further comprises
(A) one or more, preferably one to five, more preferably one to four, most preferably one or two silane monomers, which independently are selected from molecules of formula (I)

   R³ₐSiY₄₋ₐ (I)

   wherein
   R³ is independently selected from hydrogen and a group comprising linear and branched alkyl, cycloalkyl, alkenyl, alkynyl, (alk)acrylate, epoxy, allyl, vinyl and alkoxy and aryl having 1 to 6 rings, and wherein the group is substituted with heteroatoms selected from Si, O and/or N or unsubstituted;
   Y is a hydrolysable group or a hydrocarbon residue; and
   a is independenly an integer 1 to 3.

It is preferred that neither R³ nor Y in formula (I) comprises fluorine atoms.

The alkoxy groups of R³ and/or the hydrolysable group Y can be identical or different and preferably selected from the group of radicals having the formula

-O-R⁴ (III)

wherein
R⁴ stands for a linear or branched alkyl group having 1 to 10, preferably 1 to 6 carbon atoms, and optionally exhibiting one or two substituents selected from the group of halogen, hydroxyl, vinyl, epoxy and allyl. Most preferred are methoxy and ethoxy groups.
R⁴ preferably does not comprise fluorine atoms.

Especially preferred are di-, tri- or tetraalkoxysilanes comprising alkoxy groups according to formula (II).

In one embodiment the organosilane polymer comprises the one or more silane monomers (A) according to formula (I), which comprises one silicon atom.

In said embodiment the one or more silane monomoners (A) which comprises one silicon atom follows formula (IV):

R⁵ₐSiY₄₋ₐ (I)

wherein
R⁵ is independently selected from hydrogen and a group comprising linear and branched alkyl, cycloalkyl, alkenyl, alkynyl, (alk)acrylate, epoxy, allyl, vinyl and alkoxy and aryl having 1 to 6 rings, and wherein the group is substituted with heteroatoms selected from O and/or N or unsubstituted;
Y is a hydrolysable group or a hydrocarbon residue; and
a is independenly an integer 1 to 3.

In another embodiment the organosilane polymer comprises the one or more silane monomers (A) according to formula (I), which comprises two silicon atom, i.e. is a bi-silane.

In said embodiment the bi-silane follows formula (V):

(R⁶)₃Si-Z-Si(R⁷)₃, (V)

wherein
R⁶ and R⁷ are independently selected from hydrogen and a group consisting of linear or branched alkyl, cycloalkyl, alkenyl, alkynyl, alkoxy and aryl having 1 to 6 rings, and wherein the group is substituted or unsubstitued; and
Z is a linking group selected from bivalent unsubstituted or substituted aliphatic and aromatic groups, such as alkylene, arylene, -O-alkylene-O-; -O-arylene-O-; alkylene-O-alkylene, arylene-O-arylene; alkylene-Z¹C(=O)Z²-alkylene, arylene-Z¹C(=O)Z²-arylene and -O-alkylene-Z¹C(=O)Z²-alkylene-O-; -O-arylene-Z¹C(=O)Z²-arylene-O-, wherein Z¹ and Z² are each selected from a direct bond or -O-.
None of R⁶, R⁷ and Z in formula (III) comprises fluorine atoms.

In the bivalent "alkylene" groups and other similar aliphatic groups, the alkyl residue (or residue derived from an alkyl moiety) stands for 1 to 10, preferably 1 to 8, or 1 to 6 or even 1 to 4 carbon atoms, examples include ethylene and methylene and propylene.

"Arylene" stands for an aromatic bivalent group containing typically 1 to 3 aromatic rings, and 6 to 18 carbon atoms. Such groups are exemplified by phenylene (e.g. 1,4-phenylene and 1,3-phenylene groups) and biphenylene groups as well as naphthylene or anthracenylene groups.

The alkylene and arylene groups can optionally be substituted with 1 to 5 substituents selected from hydroxy, halo, vinyl, epoxy and allyl groups as well as alkyl, aryl and aralkyl groups. The halo group thereby does not include fluorine atoms.

Preferred alkoxy groups contain 1 to 4 carbon atoms. Examples are methoxy and ethoxy.

The term "phenyl" includes substituted phenyls such as phenyltrialkoxy, in particular phenyltrimethoxy or phenyltriethoxy. The phenyl as well as other aromatic or alicyclic groups can be coupled directly to a silicon atom, or they can be coupled to a silicon atom via a methylene or ethylene bridge.

Exemplary silane monomers according to formula (I) include tetraethoxysilane (TEOS), tetramethoxysilane (TMS), methyltriethoxysilane (MTEOS), methyltrimethoxysilane (MTMS), dimethyldiethoxysilane (DMDEOS), dimethyldimethoxysilane (DMDMS), diphenyldimethoxysilane (DPDMS), 3-(Trimethoxysilyl)propylmethacrylate (MEMO), 3-(Triethoxysilyl)propylmethacrylate, 5-(Bicycloheptenyl)triethoxysilane (BCHTEOS), (3-Glycidoxypropyl)triethoxysilane, (3-Glycidoxypropyl)trimethoxysilane (GPTMS), allyltrimethoxysilane (allylTMS), allyltriethoxysilane (allylTEOS), vinyltrimethoxysilane (vinylTMS), vinyltriethoxysilane (vinylTEOS), (3-Glycidopropyl)dimethoxymethylsilane (Me-GPTMS), methacryloxypropylmethyldimethoxysilane (Me-MEMO), phenylmethyldimethoxysilane (PMDMS), phenyltrimethoxysilane (PTMS), phenyltriethoxysilane (PTEOS), 1,2-Bis(triethoxysilyl)ethane (BTESE), 1,2-Bis(trimethoxysilyl)ethane (MEOS), 1,2-Bis(methyldimethoxysilyl)ethane (Me-BDMSE), octaethoxy-1,3,5-trisilapentane (OETSP) and 1,2-Bis(trimethoxysilyl)phenyl (BTMSP), [2-(3,4-Epoxycyclohexyl)ethyl]trimethoxysilane (ECTMS) and mixtures thereof.

Especially preferred is tetraethoxysilane (TEOS).

It is preferred that the weight ratio of the one or more silane monomers (A) to the one or more silane monomers (B) in the organosiloxane polymer is in the range of from 1.2 : 1.0 to 99.0 : 1.0, preferably from 1.5 : 1.0 to 10.0 : 1.0, more preferably from 2.0 : 1.0 to 9.0 : 1.0, still more preferably from 3.0 : 1.0 to 6.5 : 1.0, most preferably from 4.0 : 1.0 to 5.0 : 1.0.

In an especially preferred embodiment the organosiloxane polymer as described above or below is free from fluorine atoms.

The organosiloxane polymer as described above or below is produced by means of a process comprising the steps of:
a) Preparing the one or more silane monomers (B) by click-cycloaddition reaction of the accordant azidoalkyltrialkoxysilane and the accordant alkyne derivative in the presence of a copper-based catalyst and sodium ascorbate catalyst as described above and below;
b) Providing the one or more silane monomers (A) as described above or below;
c) Admixing the one or more silane monomers (A) and the one or more silane monomers (B) in a first solvent to obtain a mixture;
d) Subjecting the mixture to an at least partial hydrolysis of the monomers in the presence of a catalyst, whereby the hydrolysed monomers are at least partially polymerized and cross-linked;
e) Optionally changing the first solvent to a second solvent;
f) Optionally subjecting the mixture after step d) or e), if present, to further crosslinking by thermal, radiation or photo initiation or radical polymerization.

It is preferred that the first composition does not comprise a component which comprises fluorine atoms.

The first solvent is preferably selected from the group of acetone, tetrahydrofuran (THF), toluene, 1-propanol, 2-propanol, methanol, ethanol, water (H₂O), cyclopentanone, acetonitrile, propylene glycol propyl ether, methyl-tert-butylether (MTBE), propylene glycol monomethylether acetate (PGMEA), methyl ethyl ketone, methyl isobutyl ketone, propylene glycol monomethylether (PGME) and propylene glycol propyl ether (PnP). It is preferred that the first solvent does not include fluorine atoms.

The the one or more silane monomers (A) and the one or more silane monomers (B) can be admixed in the first solvent at any suitable temperature for solving the silane monomers. Usually, room temperature suffices.

In the next method step the mixture is subjected to an at least partial hydrolysis in the presence of a catalyst.

Suitable catalysts are acidic catalysts, basic catalysts, or other catalysts.

Acidic catalysts are preferably selected from nitric acid (HNO₃), sulfuric acid (H₂SO₄), formic acid (HCOOH), hydrochloric acid (HCl), sulfonic acid, hydrogen fluoride (HF), acetic acid (CH₃COOH), trifluoromethanesulfonic acid or p-toluene sulfonic acid. Especially preferred acidic catalysts are nitric acid (HNO₃) hydrochloric acid (HCl) and formic acid (HCOOH).

Basic catalysts are preferably selected from triethylamine (TEA), ammonium hydroxide (NH₄OH), tetraethylammonium hydroxide (TEAH), tetramethylammonium hydroxide (TMEA), 1,4-diazabicyclo[2.2.2]octane, imidazole and diethylenetriamine.

Other catalysts are preferably selected from 2,2,3,3,4,4,5,5-octafluoropentylacrylate, polyethylene glycol) 200, polyethylene glycol) 300 and n-butylated melamine formaldehyde resin.

Preferably the catalyst does not comprise fluorine atoms.

The hydrolysis step is preferably performed at a temperature of from 20 to 80°C for 1 to 24 hours, such as at room temperature overnight.

During the hydrolysis step the silane monomers are at least partially hydrolysed. Said at least partially hydrolysed silane monomers then are at least partially polymerized, preferably by condensation polymerization and crosslinked to form a siloxane polymer. Said polysiloxane usually has a relatively low molecular weight in range of about 500 to 2000 g/mol.

According to a preferable embodiment the subjecting the mixture to an at least partial hydrolysis includes refluxing. A typical refluxing time is 2 h.

The first solvent can be changed to a second solvent in an optional further method step after the hydrolysis step. The optional solvent change is advantageous, since it assists the removal of water and alcohols formed during hydrolysis of the silane monomers. In addition, it improves the properties of the final organosiloxane polymer solution when used as coating layer(s) on the substrate.

Especially, when using a fluorine-comprising component, such as a fluorine comprising first solvent, catalyst or additive, solvent change to a second solvent is conducted.

The second solvent is preferably selected from the group of propylene glycol methyl ether (PGME), propylene glycol methyl ether acetate (PGMEA), 1-ethanol, 2-ethanol (IPA), acrylonitrile diacetone alcohol (DAA), propylene glycol n-propyl ether (PnP), methyl isobutyl ketone, methyl ethyl ketone or mixtures thereof.

The second solvent does not comprise fluorine atoms.

The mixture comprising the siloxane polymer can be further subjected to a crosslinking step after the hydrolysis step. Thereby, the organosiloxane polymer is preferably at least partially crosslinked by hydrosilylation, thermal, radiation or photo initiation or radical polymerization.

In the present context, the term "partially crosslinked" means that the polymer is capable of further crosslinking at conditions conducive to cross-linking. In practice, the polymer still contains at least some reactive, crosslinking groups after the first polymerisation step. The further crosslinking, which typically takes place after deposition of the partially crosslinked composition on a substrate, will be described below.

The siloxane polymer is preferably at least partially crosslinked by hydrosilylation, thermal, radiation or photo initiation using catalysts.

Suitable thermal, radiation or photo initiators are preferably radical initiators, which can be selected from tert-amyl peroxybenzoate, 4,4-azobis(4-cyanovaleric acid), 1,1'-azobis(cyclohexanecarbonitrile), benzoyl peroxide, 2,2-bis(tert-butylperoxy)butane, 1,1-bis(tert-butylperoxy)cyclohexane, 2,2'-azobisisobutyronitrile (AIBN), 2,5-bis(tert-butylperoxy)-Z,S-dimethylhexane, 2,5-bis(tert-Butylperoxy)- 2,5 -dimethyl-3 -hexyne, bis(1 -(tert-butylperoxy)- 1 -methylethyl)benzene, 1,1-bis(tert-butylperoxy)-3,3,5-trimethylcyclohexane, tert-butyl hydroperoxide, tert-butyl peracetate, tert-butyl peroxide, tert-butyl peroxybenzoate, tert-butylperoxy isopropyl carbonate, bumene hydroperoxide, byclohexanone peroxide, bicumyl peroxide, lauroyl peroxide, 2,4- pentanedione peroxide, peracetic acid or potassium persulfate, or cationic initiators, such as sulfonium hexafluoroantimonate. Especially preferred is 2,2'-azobisisobutyronitrile (AIBN).

The silane group is capable of achieving cross-linking to a carbon-carbon double bond, such as a vinyl or allyl group) of an adjacent siloxane polymer chains upon hydrosilylation, preferably in the presence of a suitable catalyst, such as a platinum (Pt)-based catalyst such as the Speier catalyst (H₂PtCl₆.H₂O), Karstedt's catalyst (Pt(0)-1,3-divinyl-1,1,3,3-tetramethyldisiloxane complex solution) or a rhodium (Rh)-based catalyst such as Tris(triphenylphosphine)rhodium (I) chloride.

None of the initiators or the catalysts preferably comprise fluorine atoms.

Thereby, thermal crosslinking is preferably conducted at temperatures in the range of about 30 to 200 °C.

Typically cross-linking is carried out at refluxing conditions of the solvent.

To improve resolution of the material when applied to photolithography, the organosiloxane polymer can be optionally partially cross-linked during polymerization, in particular during or immediately after condensation polymerization. Various methods can be used for achieving cross-linking. For example, cross-linking method where two chains are joined via reactive groups not affecting any of the active groups intended for the UV photolithography can be employed. To mention an example, hydrosilylation for example using a proton on one chain reacting with a double bond on another chain will achieve cross-linking of desired kind. Another example is cross-linking through double bonds or epoxy groups.

Different active groups are preferably used for cross-linking and for photolithography. Thus, the cross-linking of the siloxane polymer can be achieved with an active group having double bonds or epoxy groups or both, such as epoxy, vinyl or allyl or methacrylate group using radiation or initiators and photoacid generators.

Epoxy groups can be employed for UV-lithography and vice versa. The proportion of active groups required for cross-linking is generally smaller than for UV lithography, e.g. about 0.1 to 10 mol%, based on the monomers, for cross-linking and about 5 to 50 mol%, based on the monomers, for UV lithography.

The amount of the initiator added to the reaction mixture/ solution is generally about 0.1 to 10 wt%, preferably about 0.5 to 5 wt%, calculated from the total weight of the siloxane polymer.

As a result of the partial cross-linking, the molecular weight will typically be 2- to 10-folded. Thus from a molecular weight in the range of about 500 to 2000 g/mol, the crosslinking will increase it above 3000, preferably to 4000 to 20000 g/mol.

Before further condensation the excess of water is preferably removed from the material and at this stage it is possible to make a solvent exchange to another synthesis solvent if desired. This other synthesis solvent may function as the final or one of the final processing solvents of the siloxane polymer. The residual water and alcohols and other by-products may be removed after the further condensation step is finalized. Additional processing solvent(s) may be added during the formulation step to form the final processing solvent combination. After the formulation of the composition, the polymer is ready for processing in, for example, roll-to-roll film deposition or in a lithographic process.

By adjusting the hydrolysis and condensation conditions it is possible to control the concentration/ content of the group capable of being deprotonated (e. g. an OH-group) and any residual leaving groups from the silane precursors (e. g. alkoxy groups) of the organosiloxane polymer composition and also to control the final molecular weight of the siloxane polymer. This greatly affects dissolution of the organosiloxane polymer material into the aqueous based developer solution. Furthermore, the molecular weight of the polymer also greatly effects on the dissolution properties of the organosiloxane polymer into developer solutions.

Thus, for example, it has been found that when the final organosiloxane polymer has a high content of hydroxyl groups remaining and a low content of alkoxy (e.g. ethoxy) groups, the final siloxane polymer can be dissolved into an alkaline-water developer solution (egg. tetra methyl ammonium hydroxide; TMAH, or potassium hydroxide; KOH).

On the other hand, if the remaining alkoxy-group content of the final organosiloxane polymer is high and it contains hardly any OH-groups, the final siloxane polymer has a very low solubility in an alkaline-water developer of the above kind. The OH-groups or other functional groups, such as amino (NH₂), thiol (SH), carboxyl, phenol or similar that result in solubility to the alkaline developer systems, can be attached directly to the silicon atoms of the siloxane polymer backbone or optionally attached to organic functionalities attached into the siloxane polymer backbone to fi1 rther facilitate and control the alkaline developer solubility.

After synthesis, the organosiloxane polymer composition can be diluted using a proper solvent or solvent combination to give a solid content which in film deposition will yield the pre-selected film thickness.

### Layered structure

In another aspect the the present invention relates to a layered structure comprising
(X) a substrate layer; and
(Y) a coating layer coated on at least one surface of the substrate layer (X),
wherein the coating (Y) comprises the organosiloxane polymer as described above or below.

The substrate layer (X) can be any kind of surface of a substrate, which shall be coated.

The material of the substrate layer (X) is not particularly limited.

Examples for the material of the substrate layer (X) are e.g. glass, quartz, silicon, silicon nitride, polymers, metals and plastics and combinations thereof.

Furthermore, the substrate layer (X) can also include number of different surfaces such as different oxides, doped oxides, semimetals and the like or mixture thereof.

Suitable polymers are e.g. thermoplastic polymers, such as polyolefins, polyesters, polyamides, polyimides, polycarbonates, acrylic polymers, such as poly(methylmethacrylate), and Custom Design polymers.

Especially preferred polymers are polymethylmethacrylate (PMMA), polyethyleneterephtalate (PET) and colorless polyimide (CPI).

The substrate layer (X) can be the outmost layer of a device or an internal layer of a single stack. The substrate layer (X) can be coated on one or both sides.

The substrate layer (X) can be flexible, bendable or both, such that it is capable of being bent about a mandrel having a first minimum radius of curvature without breaking. A layered structure of the present kind is in particular capable of being bent about a mandrel having a second minimum radius of curvature without breaking, said first minimum radius being smaller or equal to the second minimum radius of curvature.

The at least one surface of the substrate layer (X) can be modified before depositing the first composition onto at least one surface of the substrate to form a coating layer (Y). The at least one surface of the substrate layer (X) can be modified physically or chemically.

Suitable physical modifications are plasma treatment or corona treatment or similar treatments.

Suitable chemical modifications could be a chemical cleaning process for cleaning the at least one surface of the substrate layer (X).

By means of physical or chemical modification the at least one surface is preferably activated to promote adhesion between the substrate layer (X) and the coating layer (Y).

In one embodiment the coating layer (Y) can be the only coating layer of the layered structure. In said embodiment the layered structure is a mono-layered structure and the coating layer (Y) is in adherent contact with the at least one surface of the substrate layer (X).

In another embodiment the layered structure is a multi-layered structure. In said embodiment the coating layer (Y) is one of a multitude of coating layers, such as one of two, three or four coating layers.

Thereby, the coating layer (Y) can be the innermost coating layer of the multi-layered structure. This means that the coating layer (Y) is in adherent contact with the at least one surface of the substrate layer (X). A different coating layer (Z) is then coated onto the surface of coating layer (Y). The general structure of the multi-layered structure includes the structure (X)-(Y)-(Z).

Alternatively, the coating layer (Y) can be the outermost coating layer of the multi-layered structure. This means that a different coating layer (Z) is in adherent contact with the at least one surface of the substrate layer (X).The coating layer (Y) is then coated onto the multi-layered structure as outermost coating layer. The general structure of the multi-layered structure includes the structure (X)-(Z)-(O)-(Y). Thereby, (Z) identifies the innermost coating layer (Z), which is in adherent contact with at least one surface of the substrate layer (X) and (Y) identifies the coating layer (Y) as outermost layer. (O) identifies optional further coating layers, which, if present, are sandwiched between coating layers (Z) and (Y).

Coating layer (Y) preferably has a thickness of 10 nm to 50 µm, more preferably of 15 nm to 30 µm, still more preferably 25 nm to 25 µm.

Coating layer (Z), if present, preferably has a thickness of 10 nm to 50 µm, more preferably of 15 nm to 30 µm, still more preferably 25 nm to 25 µm.

Coating layer (Z) preferably comprises an organosiloxane polymer.

The layered structure is preferably produced by a process comprising the following steps:
- Providing a substrate (X);
- Providing a composition comprising the organosiloxane polymer as described above or below;
- Depositing the composition onto at least one surface of the substrate (X) to form a coating layer (Y);
- Cross-linking the siloxane polymer chains organosiloxane polymer of the coating layer (Y) as to obtain a coating layer (Y) comprising a cross-linked organosiloxane polymer on at least one surface of the substrate (X).

The composition comprising the organosiloxane polymer as described above or below is preferably prepared as described above or below.

The composition is deposited onto the least one surface of the substrate (X) to form the coating layer (Y)

In one embodiment the coating layer (Y) is in adherent contact with the at least one surface the substrate (X).

In another embodiment the step of depositing the composition onto at least one surface of the substrate (X) is preceded by process steps of forming a coating layer (X) on the at least one surface of the substrate (X) and optionally forming one or more optional coating layers (O) on the surface of coated coating layer (X). In said embodiment the coating layer (Y) is the outermost layer of a multi-layered structure.

Suitable deposition methods include spin-on, clip, spray, ink-jet, roll-to-roll, gravure, reverse gravure, bar coating, slot, flexo-graphic, curtain, screen printing coating methods, extrusion coating, dip coating, flow coating or slit coating.

Typically, after deposition, or during the deposition step, the solvent is evaporated and the coating layer (Y) dried, preferably by thermal drying or optionally by vacuum and/or thermal drying combined. This step is also referred to as pre-curing.

In a second, subsequent step the coating layer (Y) is cured to final hardness by thermal curing at elevated temperature or by using UV exposure followed by thermal curing at elevated temperature.

In one embodiment, the pre-curing and the final curing steps are combined by carrying out heating by using an increasing heating gradient. In addition to the thermal cure only process, the curing can be performed in three steps, the process comprising thermal pre-cure and UV-cure followed by final thermal cure. It is also possible to apply a two steps curing process where thermal pre-cure is followed by UV-cure. In such a case no final thermal cure is preferably applied after UV-cure).

According to a particular embodiment the method further includes developing the deposited film. In one embodiment, developing comprises exposing (full area or selective exposure using photomask or reticule or laser direct imaging) the deposited first siloxane polymer composition to UV light. The step of developing is typically carried out after any pre-curing step and before a final curing step.

Thus, in one embodiment the method comprises the steps of
- pre-curing or drying the coating layer (Y);
- optionally exposing the thus coating layer (Y);
- optionally developing the thus obtained coating layer (Y); and
- curing the coating layer (Y).

Exemplary epoxy-functional group containing monomers include (3-glycidoxypropyl)trimethoxysilane, 1-(2-(Trimethoxysilyl)ethyl)cyclohexane-3,4-epoxide, (3-glycidoxypropyl)triethoxysilane, (3- glycidoxypropyl)tripropoxysilane, 3-glycidoxypropyltri(2-methoxyethoxy)silane, 2,3-epoxypropyltriethoxysilane, 3,4-epoxybutyltriethoxysilane, 4,5- epoxypentyltriethoxysilane, 5,6-epoxyhexyltriethoxysilane, 5,6- epoxyhexyltrimethoxysilane, 2-(3,4-epoxycyclohexyl)ethyltriethoxysilane, 2-(3,4-epoxycyclohexyl)ethyltrimethoxysilane, 4-(trimethoxysilyl)butane- 1,2-epoxide.

Further examples of functionalized compounds are acrylate and metacrylate compounds, such as tetraethylene glycol diacrylate, trimethylo Ipropane triacrylate, pentaerythritol triacrylate, ditrimethylolpropane tetraacrylate, dipentaerythritol pentaacrylate, and dipentaerythritol hexaacrylate and combinations thereof. Such compounds can be used as part of the silane compositions.

It is preferred that none of the epoxy-functional group containing monomers and the functionalized compounds comprise fluorine atoms.

It has been found that the layered structure shows a good balance of properties of adhesion coating layer (Y) on the substrate (X), high hardness, high water contact angle, low abrasion, high transmittance and low haze of the coating layer (Y).

The layered structure according to the present invention is suitable for flexible electronics applications, including displays, optical lens, transparent boards, and automotive industries especially as a lightweight alternative to glass.

### Examples

### 1. Determination methods

### Characterization of silane monomers according to formula (II) by NMR, ATR-FTIR and MS

NMR spectra (including ¹H, ¹³C, DEPT135, 2D-COSY, HSQC, HMBC) were recorded on Bruker Avance^{™} 400 MHz spectrometer. CDCl₃ was used as solvent, and chemical shifts (*δ* in ppm) were referenced to the residual solvent resonance. ATR-FTIR were measured using Alpha II FT-IR instrument from Bruker. HRMS experiments were performed using a Thermo Scientific Q-Exactive Plus Orbitrap instrument equipped with an ESI detector, using direct infusion and a 70000 resolution.

**Molecular weight:** the polymers were characterized by gel permeation chromatography. The chromatographic system consisted of a APC apparatus equipped with a quaternary HPLC pump and a refractive index detector. The polysiloxanes (1,00 g; 10% solid content) were dissolved in THF (HPLC-grade; 1,50 g). The analyte injection volume was 10 µL, the flow was 0,60 mL / min, and the column temperature was set to 40 °C. Three polystyrene exclusion-based columns were used. The mobile phase was THF (HPLC grade). Number-average molecular weight (*Mₙ*) and the weight-average molecular weight (*M_{w}*) of the polymers were determined using internal standards, *e.g*. three series of polystyrenes (Serie A: 4 polystyrenes with *M_{w}* = 130.000 g/mol, 21.500 g/mol, 6.540 g/mol, 1.160 g/mol, ,Serie B: 4 polystyrenes with *M_{w}* = 66.000 g/mol, 15.700 g/mol, 3.470 g/mol, 474 g/mol, Serie C: 4 polystyrenes with *M_{w}* = 35.700 g/mol, 8140 g/mol, 2280 g/mol, 266 g/mol).

**Solid contents:** The solid content of the polymers was determined using a Mettler Toledo HB43 instrument. The polymeric solution (0.9 - 1.1 g) to analyzed was placed in a measuring tray (disposable weighing/drying pan in aluminum). The aluminum pan was then heated by a halogen lamp for 10 min from room temperature to T = 160 °C. The mass of solid polymer present in the analyzed polymeric solution was determined after evaporation of the solvents.

**Film thickness and refractive index (RI):** the film thickness and refractive index were measured using Ellipsometer UVISEL-VASE Horiba Jobin-Yvon. Measurements are performed using silicon wafer (diameter: 150 mm, Type/Dopant: P/Bor, Orientation: <1-0-0>, Resistivity: 1-30 Ω.cm, thickness: 675 +/- 25 µm, TTV: < 5 µm, particle: < 20 @ 0,2 µm, Front surface: polished; back surface: etched; Flat 1 SEMI standard) or other suitable substrates.

**Pencil hardness (PEHA):** the pencil hardness was determined according to ASTM standard D3363-00 using a Elcometer pencil hardness tester.

**Water contact angle (WCA):** the static contact angle measurement was performed by optical tensiometer using distilled water, 4 µL droplet size, three measurement points average was recorded as the measurement result value and Young-Laplace equation was used as the numerical method to describe the contour of the drop (tool: attention theta optical tensiometer).

### Abrasion:

Abrasion testing was carried out using Bon star steel wool #0000, 250 g load, 2 x 2 cm head, 2-inch stroke, 60 cycles / minute using taber linear abraser 5750. Abrasion test evaluation criteria: Initial water contact angle, water contact angle measurement at various cycle intervals and visual inspection for surface damage / visual scratch inspection at every cycle intervals.

**Visual quality (VQ):** the visual inspection can be observed with bear eyes, under microscope using a green or red-light quality lamp inspection. The visual quality can be scored between 0 (best) to 3 (worse).

**Adhesion:** the adhesion was determined according to ASTM standard D3359-D9 using a Elcometer cross-hatch tester and Elcometer tape test.

### 2. List of components used in the examples:

a) Silane Monomers:
   TEOS = tetraethoxysilane, Ultra Pure Solutions Inc.
   F13 = 1H,1H,2H,2H-perfluorooctyltrimethoxysilane, Sigma-Aldrich
b) Solvents:
   DMF = dimethylformamid, Sigma-Aldrich
   H₂O = deionized water
   Brine = aqueous saturated solution of NaCl, Sigma-Aldrich
   EtOAc = Ethylacetate, Sigma-Aldrich
   PGME = 1-methoxy-2-propanol, Ultra Pure Solutions Inc.
   IPA = 2-propanol, Merck
   Acetone, Brenntag
   MEK = methylethylketone, Sigma-Aldrich
c) Catalysts:
   Cu(II)SO₄·5H₂O, Sigma-Aldrich
   Na-ascorbate = Sodium ascorbate, Sigma-Aldrich
   HNO₃ = nitric acid, Merck
d) Fluorinated solvent
   Novec 7100 = mixture of isomers of methoxy-nonafluorobutane, 3M
e) Synthesis, purification and characterization of silane monomers according to formula (II)

### 1-(Phenylpropyl)-4-[3-(triethoxysilyl)propyl]-1H-1,2,3-triazole (3a)

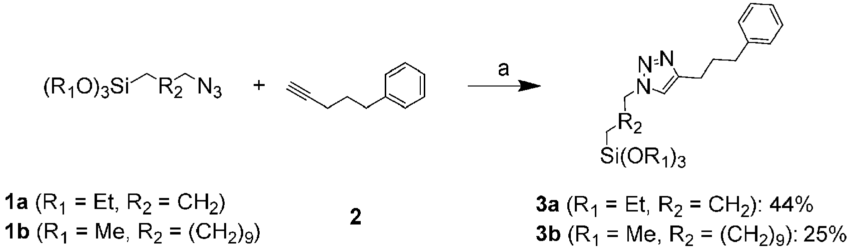

To a solution of 3-azidopropyltriethoxysilane (**1a**) (1.00 g, 4.04 mmol) in DMF (10 mL), 5-phenyl-1-pentyne (**2**) (0.61 g, 4.24 mmol) was added, followed by Na-ascorbate (20 mol%) and Cu(II)SO₄·5H₂O (10 mol%) dissolved in DMF (1 mL). The resulting mixture was stirred at room temperature overnight. H₂O (50 mL) was added, and the aqueous phase was extracted with EtOAc (3 x 40 mL). The combined organic phases were washed with H₂O (80 mL) and brine (40 mL). The organic layer was dried over Na₂SO₄, filtrated, and concentrated under reduce pressure. The crude was purified by flash chromatography on silica gel (EtOAc/*n*-Pentane = 1:1) to give compound **3a** (0.70 g, 1.78 mmol, 44% yield) as a colourless liquid. TLC (SiO₂, EtOAc/n-Pentane = 1:1) R_{f} = 0.69. ATR-FTIR: *v*ₘₐₓ 3136 (C-H stretch triazole), 3045, 3030 (C-H stretch aromatic), 2973, 2926, 2886 (CH₂ stretch), 1603, 1557 (C=C stretch aromatic), 1496 (C-H stretch aromatic), 1455 (N=N stretch), 1389 (CH₂ deformation), 1333, 1325, 1294 (CH₂ wag), 1215, 1164 (C-N stretch), 1090, 953 (Si-O-C stretch), 781, 746, 699 (C-H wag aromatic) cm⁻¹. ¹H NMR (400 MHz, CDCl₃) *δ_{H}*7.16 (m, 3H, NCH and 2 x H-*m*-Ph), 7.08 (m, 3H, 2 x H-o-Ph and H-*p*-Ph), 4.21-4.20 (m, 2H, CH₂N), 3.72-3.69 (q, 6H, 3 x OCH₂), 2.65-2.57 (m, 4H, CH₂Ph and CH₂CN₃), 1.90 (m, 4H, CH₂*CH*₂Ph and CH₂*CH₂*Si), 1.12-110 (t, 9H, 3 x CH₃), 0.50-0.48 (m, 2H, CH₂Si). ¹³C NMR (100 MHz, CDCl₃) *δ_{C}* 147.77 (CN₃), 141.97 (C_{q}-Ph), 128.52 (C-o-Ph), 128.36 (C-*m*-Ph), 125.85 (C-*p*-Ph), 120.76 (NCH), 58.55 (OCH₂), 52.31 (CH₂N), 35.41 (CH₂CN₃), 31.15 (CH₂*CH₂Ph*), 25.25 (CH₂*Ph*), 24.30 (CH₂*CH₂*Si), 18.33 (CH₃), 7.51 (CH₂Si). +ESI-HRMS *m*/*z*: calc'd for [M+H]⁺ C₂₀H₃₄N₃O₃Si = 392.2369, found = 392.2357.

### 1-(Phenylpropyl)-4-[3-(trimethoxysilyl)undecyl]-1H-1,2,3-triazole (3b)

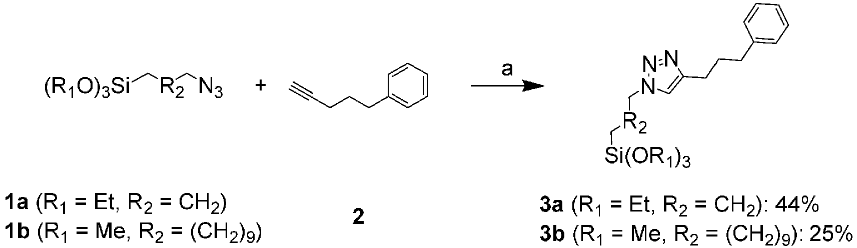

To a solution of 3-azidoundecyltrimethoxysilane (**1b**) (1.50 g, 4.72 mmol) in DMF (15 mL), 5-phenyl-1-pentyne (**2**) (0.71 g, 4.96 mmol) was added, followed by Na-ascorbate (20 mol%) and Cu(II)SO₄·5H₂O (10 mol%) dissolved in DMF (1 mL). The resulting mixture was stirred at room temperature overnight. H₂O (75 mL) was added, and the aqueous phase was extracted with EtOAc (3 x 50 mL). The combined organic phases were washed with H₂O (100 mL) and brine (50 mL). The organic layer was dried over Na₂SO₄, filtrated, and concentrated under reduce pressure. The crude was purified by flash chromatography on silica gel (EtOAc/*n*-Pentane = 1:1) to give compound **3b** (0,54 g, 1.17 mmol, 25% yield) as a colourless liquid. TLC (SiO₂, EtOAc/n-Pentane = 1:1) R_{f} = 0.72. ATR-FTIR: *v*ₘₐₓ 3142 (C-H stretch triazole), 3085, 3063, 3028 (C-H stretch aromatic), 2916, 2848 (CH₂ stretch), 1602, 1551 (C=C stretch aromatic), 1495 (C-H stretch aromatic), 1462 (N=N stretch), 1408 (CH₂ deformation), 1368, 1325, 1270 (CH₂ wag), 1241, 1188 (C-N stretch), 1076, 1053, 1029, 901, 883 (Si-O-C stretch), 778, 745, 723, 695, 668 (C-H wag aromatic) cm⁻¹. ¹H NMR (400 MHz, CDCl₃) *δ_{H}*7.27 (m, 3H, NCH and 2 x H-*m*-Ph), 7.20 (m, 3H, 2 x H-o-Ph and H-*p*-Ph), 4.31-4.30 (m, 2H, CH₂N), 3.59 (s, 9H, 3 x OCH₃), 2.77-2.69 (m, 4H, CH₂Ph and CH₂CN₃), 2.04-2.02 (m, 2H, CH₂*CH₂*Ph), 1.88 (s, 2H, CH₂*CH₂*Si), 1.42-1.27 (m, 16H, 8 x CH₂), 0.67-0.66 (m, 2H, CH₂Si). ¹³C NMR (100 MHz, CDCl₃) *δ_{C}* 147.87 (CN₃), 141.98 (C_{q}-Ph), 128.53 (C-o-Ph), 128.37 (C-*m*-Ph), 125.85 (C-*p*-Ph), 120.55 (NCH), 50.52 (OCH₃), 50.21 (CH₂N), 35.44 (CH₂*C*N₃), 33.16 (CH₂(*CH₂)₂*Si), 31.17 (CH₂*CH₂Ph*), 30.39, 29.55, 29.48, 29.42, 29.26, 29.06, 26.56 (7 x CH₂), 25.26 (CH₂*Ph*), 22.64 (CH₂*CH₂*Si), 9.20 (CH₂Si). +ESI-HRMS *m*/*z*: calc'd for [M+H]⁺ C₂₅H₄₄N₃O₃Si = 462.3152, found = 462.3145.

### 1-(Napththyl)-(3-(triethoxysilyl)propyl]-1H-1,2,3-triazole (5)

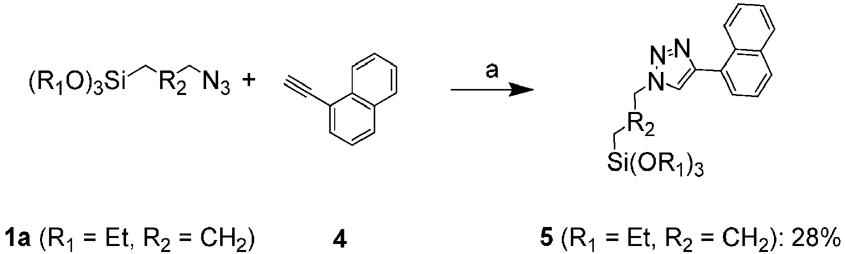

To a solution of 3-azidopropyltriethoxysilane (**1a**) (1.00 g, 4.04 mmol) in DMF (10 mL), 1-ethynylnaphthalene (**4**) (0.65 g, 4.24 mmol) in DMF (15 mL) was added, followed by Na-ascorbate (20 mol%) and Cu(II)SO₄·5H₂O (10 mol%) dissolved in DMF (1 mL). The resulting mixture was stirred at room temperature overnight. H₂O (50 mL) was added, and the aqueous phase was extracted with EtOAc (3 x 60 mL). The combined organic phases were washed with H₂O (80 mL) and brine (40 mL). The organic layer was dried over Na₂SO₄, filtrated, and concentrated under reduce pressure. The crude was purified by two consecutive flash chromatography on silica gel (EtOAc/*n*-Pentane = 1:1 and EtOAc/n-pentane = 1:3) to give compound **5** (0.46 g, 1.15 mmol, 28% yield) as a viscous orange liquid. TLC (SiO₂, EtOAc/*n*-Pentane = 1:3) R_{f} = 0.73. ATR-FTIR: *v*ₘₐₓ 3133 (C-H stretch triazole), 3050, 3063 (C-H stretch aromatic), 2973, 2925, 2886 (CH₂ stretch), 1593 (C=C stretch aromatic), 1506 (C-H stretch aromatic), 1440 (N=N stretch), 1390 (CH₂ deformation), 1352, 1294, 1258 (CH₂ wag), 1212, 1164 (C-N stretch), 1099, 1071, 1050, 1017, 945 (Si-O-C stretch), 792, 774, 668 (C-H wag aromatic) cm⁻¹. ¹H NMR (400 MHz, CDCl₃) *δ_{H}* 8.36 (s, 1H, H₈), 7.87-7.86 (m, 3H, all H_{Ar}), 7.71 (s, 1H, NCH), 7.49 (s, 3H, all H_{Ar}), 4.47-4.46 (m, 2H, CH₂N), 3.82 (m, 6H, 3 x OCH₂), 2.13-2.11 (s, 2H, CH₂*CH₂*Si), 1.22-1.21 (m, 9H, 3 x CH₃), 0.68-0.67 (m, 2H, CH₂Si). ¹³C NMR (100 MHz, CDCl₃) *δ_{C}* 146.84 (CN₃), 134.07 (C_{Ar}, C₄ₐ or C₈ₐ), 131.33 (C_{Ar}, C₁), 128.96 (CH_{Ar}, C₂), 128.61 (CH_{Ar}), 128.41 (C_{Ar}, C₄ₐ or C₈ₐ), 127.35 (CH_{Ar}), 126.74 (CH_{Ar}), 126.12 (CH_{Ar}, C₈), 125.63 (CH_{Ar}), 125.53 (CH_{Ar}), 122.78 (NCH), 58.74 (OCH₂), 52.70 (CH₂N), 24.52 (CH₂*CH₂*Si), 18.48 (CH₃), 7.72 (CH₂Si). +ESI-HRMS *m*/*z*: calc'd for [M+H]⁺ C₂₁H₃₀N₃O₃Si = 400.2056, found = 400.2055.

### 4-(1, 1'-biphenyl)-[3-(triethoxysilyl)propyl]-1H-1,2,3-triazole (7):

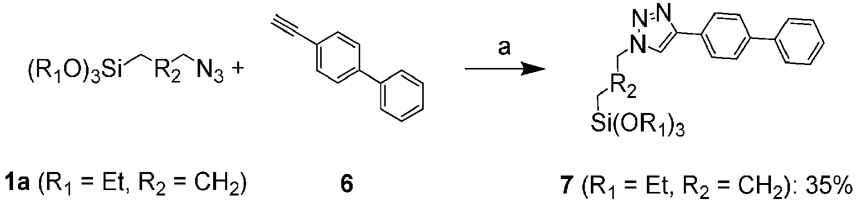

To a solution of 3-azidopropyltriethoxysilane (**1a**) (1.00 g, 4.04 mmol) in DMF (10 mL), 4-Ethynylbiphenyl (**6**) (0.75 g, 4.24 mmol) in DMF (5 mL) was added, followed by Na-ascorbate (20 mol%) and Cu(II)SO₄·5H₂O (10 mol%) dissolved in DMF (1 mL). The resulting mixture was stirred at room temperature overnight. H₂O (50 mL) was added, and the aqueous phase was extracted with EtOAc (3 x 60 mL). The combined organic phases were washed with H₂O (80 mL) and brine (40 mL). The organic layer was dried over Na₂SO₄, filtrated, and concentrated under reduce pressure. The crude was purified by two consecutive flash chromatography on silica gel (EtOAc/*n*-pentane = 4:1) to give compound **7** (0.60 g, 1.14 mmol, 35% yield) as a slightly orange solid. TLC (SiO₂, EtOAc/*n*-Pentane = 4:1) R_{f} = 0.85. ATR-FTIR: *v*ₘₐₓ 3137 (C-H stretch triazole), 3058, 3035 (C-H stretch aromatic), 2971, 2925, 2880 (CH₂ stretch), 1596 (C=C stretch aromatic), 1557 (C-H stretch aromatic), 1441 (N=N stretch), 1389 (CH₂ deformation), 1364, 1311, 1262 (CH₂ wag), 1222, 1197, 1165 (C-N stretch), 1100, 1072, 1049, 1021, 987 (Si-O-C stretch), 808, 761, 727, 686 (C-H wag aromatic) cm⁻¹. ¹H NMR (400 MHz, CDCl₃) *δ_{H}* 7.91 (m, 2H, CH_{Ar5}, CH_{Ar3}), 7.82 (s, 1H, NCH), 7.67-7.64 (m, 4H, CH_{Ar6}, CH_{Ar6'}, CH_{Ar2}, CH_{Ar2'}), 7.46-7.45 (m, 2H, CH_{Ar2'}, CH_{Ar6'}, 7.37 (s, 1H, CH_{Ar4'}), 4.43-4.42 (m, 2H, CH₂N), 3.83 (m, 6H, 3 x OCH₂), 2.10-2.08 (s, 2H, CH₂*CH₂*Si), 1.24-1.23 (m, 9H, 3 x CH₃), 0.67-0.65 (m, 2H, CH₂Si). ¹³C NMR (100 MHz, CDCl₃) *δ_{C}* 147.44 (CN₃), 140.93 (C_{Ar}, C₄), 140.76 (C_{Ar}, C_{1'}), 129.91 (C_{Ar}, C₁), 128.97 (CH_{Ar}, C_{5'} and C_{3'}), 127.65 (CH_{Ar}, C₆ and C₂; or C_{6'} and C_{2'}), 127.56 (CH_{Ar}, C_{4'}), 127.12 (CH_{Ar}, C₆ and C₂; or C_{6'} and C_{2'}), 126.21 (CH_{Ar}, C₅ and C₃), 119.83 (CH, NCH), 58.71 (OCH₂), 52.68 (CH₂N), 24.44 (CH₂*CH₂*Si), 18.46 (CH₃), 7.64 (CH₂Si). +ESI-HRMS *m*/*z*: calc'd for [M+H]⁺ C₂₃H₃₂N₃O₃Si = 426.2213, found = 426.2222.

### 3. Preparation examples

### a) Preparation Examples for coating layer (Y)

### Composition Y-1

### Root polymer

In a 50 mL round bottom flask, tetraethoxysilane (TEOS) (4.78 g) and [1-(Phenylpropyl)-4-[3-(triethoxysilyl)propyl]-1H-1,2,3-triazole (**3a**)] (1 g) were mixed in acetone (17.4 mL). HNO₃ (0.1M; 3.58 g) was added dropwise and the reaction mixture was refluxed to 2h. After cooling to room temperature, 1-Methoxy-2-propanol (PGME) (20 g) was added and solvent exchange procedure from ethanol (EtOH) / acetone / water to PGME was performed under reduce pressure. The final solid content of the reaction mixture was adjusted to 10% by addition of PGME (2.48 g).

### Formulation Y-1:

The root polymer (11.25g; 10% solid content in 1-methoxy-2-propanol) was mixed with IPA (74.45 g) and additional PGME (64.31 g).

### Composition Y-2:

### Root polymer:

In a 100 mL round bottom flask, tetraethoxysilane (TEOS) (1.44 g) and [1-(Phenylpropyl)-4-[3-(trimethoxysilyl)undecyl]-1H-1,2,3-triazole (**3b**)] (0.32 g) were mixed in acetone (30 mL). HNO₃ (0.1M; 1.07 g) was added dropwise and the reaction mixture was refluxed to 2h. After cooling to room temperature, 1-Methoxy-2-propanol (PGME) (10 g) was added and solvent exchange procedure from ethanol (EtOH) / methanol (MeOH) / acetone / water to PGME was performed under reduce pressure. The final solid content of the reaction mixture was adjusted to 10% by addition of PGME (2.47 g). This polymer was not formulated due to limited solubility in 1-methoxy-2-propanol.

### Composition Y-3

### Root polymer:

In a 50 mL round bottom flask, tetraethoxysilane (TEOS) (1.83 g) and [1-(Napththyl)-[3-(triethoxysilyl)propyl]-1*H*-1,2,3-triazole (**5**)] (0.39 g) were mixed in acetone (15 mL). HNO₃ (0.1M; 1.37 g) was added dropwise and the reaction mixture was refluxed to 2h. After cooling to room temperature, 1-Methoxy-2-propanol (PGME) (15 g) was added and solvent exchange procedure from ethanol (EtOH) / acetone / water to PGME was performed under reduce pressure. The final solid content of the reaction mixture was adjusted to 10% by addition of PGME (2.17 g).

### Formulation Y-3:

The root polymer (11.25g; 10% solid content in 1-methoxy-2-propanol) was mixed with IPA (74.45 g) and additional PGME (64.31 g). The root polymer (7.5g; 10% solid content in 1-methoxy-2-propanol) was mixed with IPA (49.63 g) and additional PGME (42.87 g).

### Composition Y-4

### Root polymer:

In a 50 mL round bottom flask, tetraethoxysilane (TEOS) (2.64 g) and [4-(1,1'-biphenyl)-[3-(triethoxysilyl)propyl]-1H-1,2,3-triazole (**7**)] (0.60 g) were mixed in acetone (15 mL). HNO₃ (0.1M; 1.97 g) was added dropwise and the reaction mixture was refluxed to 2h. After cooling to room temperature, 1-Methoxy-2-propanol (PGME) (20 g) was added and solvent exchange procedure from ethanol (EtOH) / acetone / water to PGME was performed under reduce pressure. The final solid content of the reaction mixture was adjusted to 5% by addition of PGME (4.26 g).

### Formulation Y-4:

The root polymer (11.25g; 10% solid content in 1-methoxy-2-propanol) was mixed with IPA (74.45 g) and additional PGME (64.31 g).

### Composition Y-5 (comparative)

### Root polymer:

In a 1L round bottom flask, tetraethoxysilane (TEOS) (57.37 g) and [1H,1H,2H,2H-Perfluorooctyltriethoxysilane] (15.60 g) were mixed in acetone (219 mL). HNO₃ (0.1M; 42.96 g) was added dropwise and the reaction mixture was refluxed to 2h. After cooling to room temperature, 1-Methoxy-2-propanol (PGME) (220 g) was added and solvent exchange procedure from ethanol (EtOH) / acetone / water to PGME was performed under reduce pressure. The final solid content of the reaction mixture was adjusted to 10% by addition of PGME (155.34 g).

### Formulation Y-5a:

The root polymer (16.5g; 10% solid content in 1-methoxy-2-propanol) was mixed with IPA (109.2 g) and additional PGME (94.31 g).

### Formulation Y-5b:

The root polymer (16.5g; 10% solid content in 1-methoxy-2-propanol) was mixed with Novec 7100 (109.2 g) and additional PGME (94.31 g).

### Formulation Y-5c:

The root polymer (16.5g; 10% solid content in 1-methoxy-2-propanol) was mixed with MEK (109.2 g) and additional PGME (94.31 g).

### 4. Preparation and properties of the coatings

### a) Coating on different substrates

The formulations were spray-coated on suitable substrates (silicon wafers, gorilla glass, anodized aluminium or hairline) using spindle apparatus (typical spray process: scan speed: 300 mm/s; pitch: 50 mm; gap: 100 mm; flow rate: 5-6 ml/min; atomization air pressure: 5 kg / cm²), followed by thermal cure example at T = 150 °C for 60 min. Hairline, anodized aluminium and gorilla glass were pre-washed with a mixture of ethanol / acetone and plasma treated at 300 W for 6 min. The coated substrates were subjected to final backing at T = 80 - 200 °C for 60 min.

### b) Properties of the coatings

The properties of the coating are listed in Table 1 below.

**Table 1: Properties of the coating**

| Example | Silicon wafers (thickness in nm, VQ) | Hairline (VQ, WCA) | Anodized aluminium (VQ, WCA) | Gorilla glass (VQ, WCA, AD, PeHa) |
|---|---|---|---|---|
| Y-1 | 70, hazy | Uneven, 71 | OK, 74 | Hazy, 68, 5B, 9H |
| Y-2 | No film | | | |
| Y-3 | 80, hazy | Uneven, 76 | OK, 78 | Hazy, 69, 5B, 9H |
| Y-4 | 80, hazy | Uneven, 76 | OK, 76 | Hazy, 68, 5B, <6B |
| Y-5a | No film | | | |
| Y-5b | ND | ND | ND | ND |
| Y-5c | ND | ND | ND | ND |

| | | | | |
|---|---|---|---|---|
| ND = not determined | | | | |

As discussed above in example Y-2 formulation Y-2 was not formed due to limited solubility of the organosiloxane polymer in 1-Methoxy-2-propanol.

In example Y-5a no film was obtained from the formulation Y-5a. In examples Y-5b and Y-5c films with very uneven film thicknesses on all substrates were obtained so that the properties were not measured.

Abrasion testings were done on hairline-coated substrates since they have the best visual quality. Abrasion results are shown in table 2 below:

**Table 2: Properties of abrasion tests on hairline coated substrates**

| Example | Adhesion / PeHa | Initial WCA | Number of cycles / WCA / VQ | | | | | |
|---|---|---|---|---|---|---|---|---|
| Y-1 | 5B / 5H | 71 | 50, 82, 0 | 200, 88, 0 | 500, 85, 1 | 1000, 91, 2 | 2000, 87, 2 | 3000, 70, 3 |
| Y-3 | 5B / 3H | 76 | 50, 87, 0 | 200, 83, 1 | 500, 85, 1 | 1000, 83, 2 | 2000, 63, 3 | ND |
| Y-4 | 5B / 4H | 76 | 50, 73, 0 | 200, 65, 2 | 500. 68, 3 | 1000, 70, 3 | ND | ND |

| | | | | | | | | |
|---|---|---|---|---|---|---|---|---|
| ND = not determined | | | | | | | | |

## Claims

1. An organosiloxane polymer comprising
(A) one or more, preferably one to five, more preferably one to four, most preferably one or two silane monomers, which independently are selected from molecules of formula (I)
R³ₐSiY₄₋ₐ (I)
wherein
R³ is independently selected from hydrogen and a group comprising linear and branched alkyl, cycloalkyl, alkenyl, alkynyl, (alk)acrylate, epoxy, allyl, vinyl and alkoxy and aryl having 1 to 6 rings, and wherein the group is substituted with heteroatoms selected from Si, O and/or N or unsubstituted;
Y is a hydrolysable group or a hydrocarbon residue; and
a is independently an integer 1 to 3; and
(B) one or more, preferably one to five, more preferably one to four, most preferably one or two silane monomers, which independently are selected from molecules of formula (II) 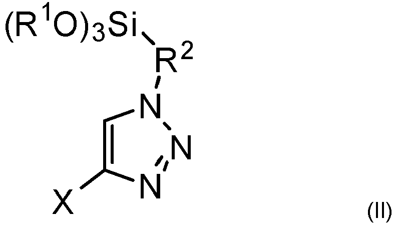 wherein
R¹ is independently selected from a C₁ to C₁₀ linear or branched alkyl group, preferably a C₁ to C₆ linear or branched alkyl group, more preferably a C₁ to C₃ linear or branched alkyl group, most preferably a methyl or ethyl group;
R² is independently selected from a C₁ to C₂₀ linear or branched alkyl group, preferably a C₂ to C₁₆ linear or branched alkyl group, more preferably a C₃ to C₁₂ linear or branched alkyl group, most preferably a linear propyl or undecyl alkyl group; and
X is independently selected from a group comprising linear and branched alkyl, cycloalkyl, alkenyl, alkynyl, (alk)acrylate, epoxy, allyl, vinyl and alkoxy and aryl having 1 to 6 rings, and wherein the group is substituted with heteroatoms selected from Si, O and/or N or unsubstituted, preferably a group comprising linear and branched alkyl, cycloalkyl, and aryl having 1 to 6 rings, and wherein the group is substituted with heteroatoms selected from Si, O and/or N or unsubstituted, more preferably a group comprising aryl having 1 to 6 rings, and wherein the group is substituted with heteroatoms selected from Si, O and/or N or unsubstituted.

2. The organosiloxane polymer according to claim 1 being free from fluorine atoms.

3. The organosiloxane polymer according to claims 1 or 2, wherein the one or more silane monomers (B) are selected from the group consisting of 1-(Phenylpropyl)-4-[3-(triethoxysilyl)propyl]-1*H*-1,2,3-triazole, 1-(Phenylpropyl)-4-[3-(trimethoxysilyl)undecyl]-1*H*-1,2,3-triazole, 1-(Napththyl)-[3-(triethoxysilyl)propyl]-1*H*-1,2,3-triazole and 4-(1,1'-biphenyl)-[3-(triethoxysilyl)propyl]-1*H-*1,2,3-triazole.

4. The organosiloxane polymer according to any one of the preceding claims, wherein the one or more silane monomers (A) are selected from the group consisting of from tetraethoxysilane (TEOS), tetramethoxysilane (TMS), methyltriethoxysilane (MTEOS), methyltrimethoxysilane (MTMS), dimethyldiethoxysilane (DMDEOS), dimethyldimethoxysilane (DMDMS), diphenyldimethoxysilane (DPDMS), 3-(Trimethoxysilyl)propylmethacrylate (MEMO), 3-(Triethoxysilyl)propylmethacrylate, 5-(Bicycloheptenyl)triethoxysilane (BCHTEOS), (3-Glycidoxypropyl)triethoxysilane, (3-Glycidoxypropyl)trimethoxysilane (GPTMS), allyltrimethoxysilane (allylTMS), allyltriethoxysilane (allylTEOS), vinyltrimethoxysilane (vinylTMS), vinyltriethoxysilane (vinylTEOS), (3-Glycidopropyl)dimethoxymethylsilane (Me-GPTMS), methacryloxypropylmethyldimethoxysilane (Me-MEMO), phenylmethyldimethoxysilane (PMDMS), phenyltrimethoxysilane (PTMS), phenyltriethoxysilane (PTEOS), 1,2-Bis(triethoxysilyl)ethane (BTESE), 1,2-Bis(trimethoxysilyl)ethane (MEOS), 1,2-Bis(methyldimethoxysilyl)ethane (Me-BDMSE), octaethoxy-1,3,5-trisilapentane (OETSP) and 1,2-Bis(trimethoxysilyl)phenyl (BTMSP), [2-(3,4-Epoxycyclohexyl)ethyl]trimethoxysilane (ECTMS) and mixtures thereof.

5. The organosiloxane polymer according to any one of the preceding claims, wherein the weight ratio of the one or more silane monomers (A) to the one or more silane monomers (B) in the organosiloxane polymer is in the range of from 1.2 : 1.0 to 99.0 : 1.0, preferably from 1.5 : 1.0 to 10.0 : 1.0, more preferably from 2.0 : 1.0 to 9.0 : 1.0, still more preferably from 3.0 : 1.0 to 6.5 : 1.0, most preferably from 4.0 : 1.0 to 5.0 : 1.0.

6. A process for producing the organosiloxane polymer according to any one of the preceding claims comprising the steps of:
a) Preparing the one or more silane monomers (B) by click-cycloaddition reaction of the accordant azidoalkyltrialkoxysilane and the accordant alkyne derivative in the presence of a copper-based catalyst and sodium ascorbate catalyst;
b) Providing the one or more silane monomers (A);
c) Admixing the one or more silane monomers (A) and the one or more silane monomers (B) in a first solvent to obtain a mixture;
d) Subjecting the mixture to an at least partial hydrolysis of the monomers in the presence of a catalyst, whereby the hydrolysed monomers are at least partially polymerized and cross-linked;
e) Optionally changing the first solvent to a second solvent;
f) Optionally subjecting the mixture after step d) or e), if present, to further crosslinking by thermal, radiation or photo initiation or radical polymerization.

7. A layered structure comprising
(X) a substrate layer; and
(Y) a coating layer coated on at least one surface of the substrate layer (X),
wherein the coating (Y) comprises the organosiloxane polymer according to any one of the preceding claims.

8. The layered structure according to claim 7, wherein the coating layer (Y) has a thickness of 10 nm to 50 µm, preferably of 15 nm to 30 µm, more preferably 25 nm to 25 µm.

9. The layered structure according to claims 7 or 8, wherein the material of the substrate layer (X) is selected from the group of glass, quartz, silicon, silicon nitride, polymers, metals and plastics and combinations thereof.

10. The layered structure according to any one of claims 7 to 9 further comprising a first coating layer (Z), which is coated in adherent contact with at least one surface of the substrate layer (X), and the coating layer (Z) is coated in adherent contact with the first coating layer (Z) as such that the layered structure has the structure (X)-(Z)-(Y), wherein the first coating layer (Z) preferably has a thickness of 10 nm to 50 µm, more preferably of 15 nm to 30 µm, still more preferably 25 nm to 25 µm.

11. The layered structure according to any one of claims 7 to 10, wherein the coating layer (Y) is the outermost layer of the layered structure.

12. A process for producing the layered structure according to any one of claims 7 to 11 comprising the following steps:
• Providing a substrate (X);
• Providing a composition comprising the organosiloxane polymer according to any one of claims 1 to 6;
• Depositing the composition onto at least one surface of the substrate (X) to form a coating layer (Y);
• Cross-linking the siloxane polymer chains organosiloxane polymer of the coating layer (Y) as to obtain a coating layer (Y) comprising a cross-linked organosiloxane polymer on at least one surface of the substrate (X).

13. The process according to claim 12, further comprising the steps of:
• Providing a second composition comprising at least two different silane monomers, wherein at least one of the silane monomers includes an active group capable of achieving cross-linking to adjacent organosiloxane polymer;
• Subjecting the second composition to at least partial hydrolysis of the monomers to form a composition comprising a second organosiloxane polymer;
• Depositing the second composition directly onto at least one surface of the substrate (X) to form a second coating layer (Z);
• Cross-linking the siloxane polymer chains of the second coating layer (Z) as to obtain a second coating layer (Z) comprising a cross-linked siloxane polymer in adherent contact with the at least one surface of the substrate (X);
• Depositing the composition comprising the organosiloxane polymer according to any one of claims 1 to 7 directly onto the second coating layer (Z) to form the coating layer (Y);
• Cross-linking the siloxane polymer chains organosiloxane polymer of the coating layer (Y) as to obtain a coating layer (Y) comprising a cross-linked organosiloxane polymer in adherent contact with the second coating layer (Z).

14. A silane monomer selected from the group consisting of 1-(Phenylpropyl)-4-[3-(triethoxysilyl)propyl]-1*H*-1,2,3-triazole, 1-(Phenylpropyl)-4-[3-(trimethoxysilyl)undecyl]-1*H*-1,2,3-triazole, 1-(Napththyl)-[3-(triethoxysilyl)propyl]-1*H*-1,2,3-triazole and 4-(1,1'-biphenyl)-[3-(triethoxysilyl)propyl]-1*H-*1,2,3-triazole.

15. The use of the organosiloxane polymer according to any one of claims 1 to 6 as fluorine-free hard coating.
